# EUROPÄISCHE PATENTSCHRIFT

(11) **EP 2 707 317 B1**
(45) Veröffentlichungstag und Bekanntmachung des Hinweises auf die Patenterteilung: **28.12.2016**
(21) Anmeldenummer: 12724892.0
(22) Anmeldetag: 04.05.2012
(51) Int. Cl.: B65G 47/52, B60B 30/06, B65G 47/86

(54) **VORRICHTUNG ZUM UMSETZEN VON FAHRZEUGRÄDERN**
DEVICE FOR TRANSFERRING VEHICLE WHEELS
DISPOSITIF PERMETTANT DE DÉPLACER DES ROUES DE VÉHICULE

(30) Priorität: 07.05.2011 DE 102011100828
(43) Veröffentlichungstag der Anmeldung: 19.03.2014
(73) Patentinhaber: Eisenmann SE, 71032 Böblingen (DE)
(72) Erfinder: STARZ, Reiner, 71263 Weil der Stadt (DE); HOFBAUER, Ulrich, 71126 Gäufelden (DE)
(74) Vertreter: Heinrich, Hanjo
(86) Internationale Anmeldenummer: PCT/EP2012/001916
(87) Internationale Veröffentlichungsnummer: WO 2012/152416

(56) Entgegenhaltungen:
- WO-A1-2012/110176
- JP-A- 6 170 658
- US-A1- 2009 035 107

## Beschreibung

Die Erfindung betrifft eine Vorrichtung zum Umsetzen von Fahrzeugrädern, bei welcher ein einzelnes Fahrzeugrad mittels eines Greifmoduls greifbar ist, welches hierzu wenigstens eine von einer Rahmenstruktur getragenen Greifeinheit mit mehreren Anpresselementen umfasst, die an eine oder mehrere Gegenflächen eines einzelnen Fahrzeugrades anpressbar sind, wobei
a) ein erstes Greifmodul und ein zweites Greifmodul an einer gemeinsamen starren Tragstruktur angebracht sind, welche mittels einer Rotationseinrichtung um eine Hauptdrehachse verdrehbar ist;
b) Translationsmittel vorhanden sind, mittels welchen die Anpresselemente mit einer Bewegungskomponente parallel zur Hauptdrehachse bewegbar sind.

Eine solche Vorrichtung ist beispielsweise aus der US 2009/035107 A1 bekannt. Fahrzeugräder, und insbesondre Leichtmetallräder von Kraftfahrzeugen, die gebräuchlich als Leichtmetallfelgen bezeichnet werden, werden in Oberflächenbehandlungsanlagen mit einem Pulver oder einem anderen Beschichtungsmaterial beschichtet. Anschließend wird die Beschichtung in einem Ofen eingebrannt. Hierzu müssen die Fahrzeugräder von einer Beschichtungsstation an einen Ofen übergeben werden. Auch Fahrzeugräder aus anderen Materialien, insbesondere Stahlräder, werden in aufeinander folgenden Arbeitsschritten behandelt. Allgemein ausgedrückt müssen Fahrzeugräder unabhängig von ihrem Material von einem ersten Arbeitsbereich an einen anderen Arbeitsbereich übergeben werden.

Hierzu werden vom Markt her bekannte Umsetzvorrichtungen der eingangs genannten Art verwendet, bei denen ein Greifmodul an einem mehrachsigen Roboterarm befestigt ist, wodurch die Übergabe mit möglichst vielen Bewegungsfreiheitsgraden erfolgen kann.

Bei Vorrichtungen mit einem Greifmodul nimmt der Roboterarm eine oder mehrere Fahrzeugräder von einem ersten Förderer auf und bewegt sich zu einem zweiten Förderer, an welchen der Roboterarm die Fahrzeugräder dann übergibt. Dann kehrt der Roboterarm unbeladen zum ersten Förderer zurück. Dieser Leerweg reduziert jedoch den Durchsatz der Umsetzvorrichtung.

Bei einer Vorrichtung der eingangs genannten Art ist die Möglichkeit eröffnet, dass das erste Greifmodul ein oder mehrere Fahrzeugräder an einem ersten Ort aufnimmt, während das zweite Greifmodul zeitnah und gegebenenfalls zeitgleich ein oder mehrere Fahrzeugräder an einem anderen Ort abgibt. Dann kann die Tragstruktur verdreht werden und die Greifmodule tauschen ihre Positionen und der Vorgang wiederholt sich. Ein Leerweg der Greifmodule unterbleibt in diesem Fall. Durch die Translationsmittel können die von den Anpresselementen gehaltenen Fahrzeugräder gegenüber den Förderern angehoben oder abgesenkt werden.

Es ist Aufgabe der Erfindung, eine Vorrichtung der eingangs genannten Art zu schaffen, bei welcher die Flexibilität erhöht ist.

Diese Aufgabe wird bei einer Vorrichtung der eingangs genannten Art dadurch gelöst, dass
die Translationsmittel eine Greifmodul-Translationseinrichtung umfassen, mittels welcher wenigstens ein Greifmodul gegenüber der Tragstruktur mit einer Bewegungskomponente parallel zur Hauptdrehachse bewegbar ist.

In diesem Fall kann die Vorrichtung z.B. auch dann eingesetzt werden, wenn Fahrzeugräder zwischen unterschiedlichen Höhenniveaus umgesetzt werden müssen.

Dabei ist es günstig, wenn die Translationsmittel eine Tragstruktur-Translationseinrichtung umfassen, mittels welcher die Tragstruktur mit einer Bewegungskomponente parallel zur Hauptdrehachse bewegbar ist. In diesem Fall können die Greifmodule auf ihre wesentliche Funktion beschränkt sein, nämlich dass die Anpresselemente Fahrzeugräder greifen und freigeben können.

Alternativ oder ergänzend kann es vorteilhaft sein, wenn die Translationsmittel wenigstens eine Anpresselement-Translationseinrichtung umfassen, welche einer Greifeinheit eines Greifmoduls zugeordnet ist und mittels welcher die Anpresselemente dieser Greifeinheit gegenüber der Rahmenstruktur des Greifmoduls mit einer Bewegungskomponente parallel zur Hauptdrehachse bewegbar ist.

Wenn beispielsweise mehrere Fahrzeugräder aus verschiedenen Produktionslinien zusammengeführt werden sollen, kann es von Vorteil sein, wenn wenigstens ein Greifmodul an der Tragstruktur mit einer Bewegungskomponente senkrecht zur Hauptdrehachse verfahrbar ist. So können z.B. zwei Zubring-Förderer parallel zueinander angeordnet sein und das Greifmodul wahlweise auf den einen oder den anderen Zubring-Förderer zugreifen.

Der Umsetzvorgang kann besonders effektiv erfolgen, wenn wenigstens eines der beiden Greifmodule als Doppelmodul ausgebildet ist und eine erste Greifeinheit und eine zweite Greifeinheit umfasst, wodurch zwei Fahrzeugräder zugleich von dem Doppelmodul aufgenommen werden können.

Wenn das Doppelmodul mittels einer Dreheinrichtung um eine Nebendrehachse verdrehbar ist, die parallel zur Hauptdrehachse verläuft, können Fahrzeugräder auch als Paar in unterschiedlichen Richtungen zur Vorrichtung bzw. von dieser weg gefördert werden.

Wenn die Anpresselemente der ersten Greifeinheit unabhängig von den Anpresselementen der zweiten Greifeinheit translatorisch bewegbar sind, kann vorteilhaft auf individuelle Geometrische Unterschiede sowohl bei den Fahrzeugrädern als auch bei möglicherweise vorhandenen Förderern eingegangen werden.

In der Praxis hat sich bewährt, wenn die Greifmodule derart eingerichtet sind, dass von den Greifmodulen gegriffene Fahrzeugräder bezogen auf deren Rotationsachse achsparallel zueinander ausgerichtet sind.

Ferner ist es günstig, wenn die Anpresselemente einer Greifeinheit jeweils von einem Stangenelement getragen und als Anpressteller ausgebildet sind, die mit ihrem Außenrand an eine Außenfläche eines Fahrzeugrades anpressbar sind, und eine Greifeinheit wenigstens drei Stangenelemente mit Anpressteller umfasst. Durch derartige Anpressteller kann die Kontaktfläche zwischen Greifeinheit und Fahrzeugrad gering gehalten werden, wodurch eine frische Oberflächenbeschichtung auch beim Transport weitgehend unbeeinträchtigt bleibt.

Nachstehend werden nun unterschiedlichen Umsetzstationen anhand der Zeichnungen näher erläutert. In diesen zeigen:
Figur 1 eine Umsetzstation einer Anlage zur Oberflächenbehandlung von Fahrzeugräder mit einer Umsetzvorrichtung nach dem Oberbegriff des Anspruchs 1 mittels welcher Fahrzeugräder von einem ersten Förderer auf einen zweiten Förderer umgesetzt werden, wobei die Umsetzstation in einer Frontansicht aus Richtung des Pfeils I in Figur 2 gezeigt
Figur 2 eine Seitenansicht der Umsetzstation aus Richtung des Pfeils II in Figur 1;
Figur 3 eine Ansicht von oben auf die Umsatzstation nach den Figuren 1 und 2;
Figur 4 eine der Figur 1 entsprechende Ansicht einer Umsetzstation mit einer erfindungsgemäßen Umsetzvorrichtung;
Figur 5 eine der Figur 1 entsprechende Ansicht eines ergänzenden Beispiels einer Umsetzstation mit einer abgewandelten Umsetzvorrichtung und einem modifizierten ersten Förderer;
Figur 6 eine der Figur 1 entsprechende Ansicht eines ergänzenden Beispiels einer Umsetzstation mit einer erneut abgewandelten Umsetzvorrichtung;
Figur 7 eine der Figur 3 entsprechende Ansicht von oben auf ein ergänzenden Beispiels einer Umsetzstation mit einer abermals abgewandelten Umsetzvorrichtung.

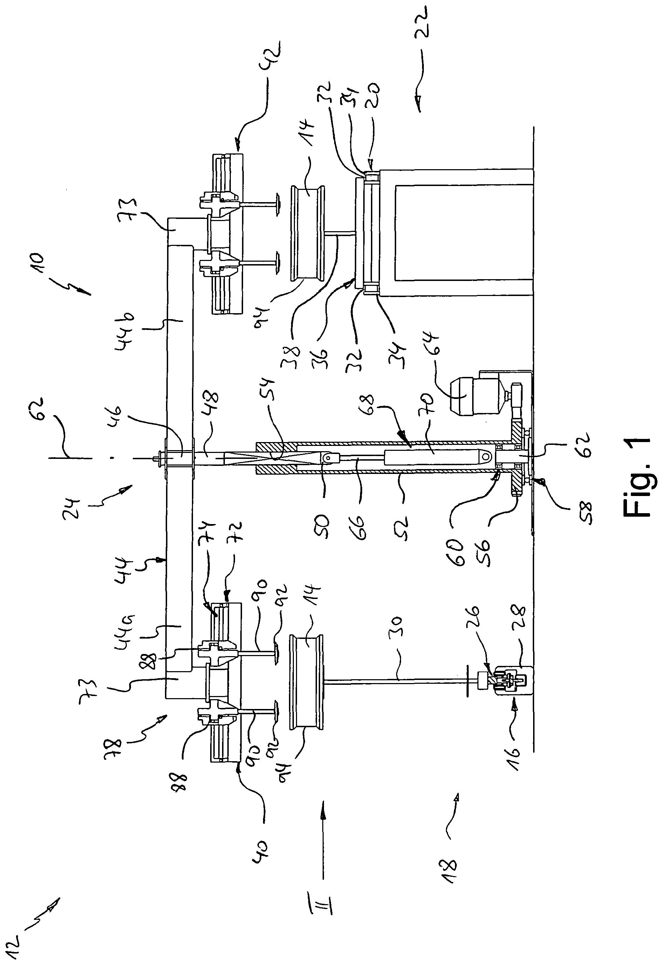

In Figur 1 ist mit 10 insgesamt eine Umsetzstation einer Oberflächenbehandlungsanlage 12 bezeichnet, in welcher Fahrzeugräder 14 mit einem Lack versehen werden. In der Umsetzstation 10 werden Fahrzeugräder 14 von einem als ersten Werkstückförderer 16, der einem ersten Arbeitsbereich 18 der Oberflächenbehandlungsanlage 12 zugeordnet ist, auf einen zweiten Werkstückförderer 20 in einem zweiten Arbeitsbereich 22 umgesetzt.

Beispielsweise kann es sich bei dem zweiten Arbeitsbereich 22 um einen Trockenofen handeln, in dessen Inneren sich der zweite Werkstückförderer 20 befindet und der über einen Ofeneingang von außen zugänglich ist. In diesem Fall kann der erste Werkstückförderer 16 frisch lackierte Fahrzeugräder 14 zur Umsetzstation fördern, die mit Hilfe einer Umsetzvorrichtung 24 von dem ersten Werkstückförderer 16 auf den zweiten Werkstückförderer 20 umgesetzt werden, um dann im Trockenofen getrocknet zu werden.

Der erste Werkstückförderer 16 ist als Spindelförderer ausgebildet, bei welchem mehrere Transportwagen 26 auf einer Tragschiene 28 ablaufen. Die Transportwagen 26 führen Werkstückspindeln 30 mit sich, von denen jede jeweils ein Fahrzeugrad 14 aufnehmen kann. Das Prinzip des Spindelförderers ist an und für sich bekannt, weshalb hierauf nicht im Detail eingegangen werden muss.

Der zweite Werkstückförderer 20 ist als ebenfalls an und für sich bekannter Kettenförderer ausgebildet und umfasst hierzu zwei parallel umlaufende Förderketten 32, die von einem Führungsprofil 34 geführt sind. Auf den Förderketten 32 liegen Werkstückträger 36 auf, die so beim Umlauf der Förderketten 32 von diesen mitgeführt und durch den zweiten Arbeitsbereich 22, beispielsweise den angesprochenen Trockenofen, bewegt werden. Jeder Werkstückträger 36 umfasst bei der vorliegenden Umsetzstation Werkstückspindeln 38, auf welche Fahrzeugräder 14 aufgesetzt werden können.

Der Spindelförderer 16 und der Kettenförderer 20 sind so aneinander angepasst, dass die Auflageebene der Fahrzeugräder 14 auf den Werkstückspindeln 30 und 36 der Transportwagen 26 bzw. der Werkstückträger 34 auf gleichem Höhenniveau verlaufen. Bei weiter unten erläuterten Abwandlungen können die betreffenden Höhenniveaus jedoch auch voneinander abweichen.

Damit die Umsetzvorrichtung 24 Fahrzeugräder 14 aufnehmen und wieder abgeben kann, umfasst sie ein erstes Greifmodul 40 und ein zweites Greifmodul 42, welche an einer starren Tragstruktur in Form eines horizontalen Tragholms 44 angebracht sind. Bezogen auf seine Mitte weist der Tragholm 44 einen ersten Tragarm 44a und einen zweiten Tragarm 44b auf, wobei das erste Greifmodul 40 an dem ersten Tragarm 44a und das zweite Greifmodul 42 an dem zweiten Tragarm 44b angebracht ist.

Der Tragholm 44 seinerseits ist mittig drehfest mit der Spitze 46 eines vertikalen Lagermastes 48 verbunden. Dessen gegenüberliegendes Ende 50 ist im Inneren einer vertikalen Drehhülse 52 angeordnet, wobei der Lagermast 48 in einem Führungsdurchgang 54 der Drehhülse 52 mit zum Lagermast 48 komplementären Querschnitt verschiebbar geführt ist. Hierauf wird weiter unten nochmals eingegangen.

Die Drehhülse 52 mündet bodenseitig in einen horizontal verlaufenden Auflageflansch 56, mit dem sie auf einem am Boden befestigten Drehlager 58 aufliegt. Der Auflageflansch 56 umgibt außerdem radial eine drehfest im Inneren der Drehhülse 52 befestigte Lagereinheit 60, mit der die Drehhülse 52 auf einen koaxial zum Drehlager 58 drehfest am Boden verankerten vertikalen Lagerbolzen 62 aufgesetzt ist. Auf diese Weise ist die Drehhülse 52 um eine vertikale Hauptdrehachse 62 verdrehbar gelagert.

Um die Drehhülse 52 um die Hauptdrehachse 62 zu verdrehen, ist ein Antrieb 64 vorhanden, der beispielsweise als Riemenantrieb oder als Zahnantrieb ausgebildet sein kann.

Das Ende 50 des Lagermastes 48 ist im Inneren der Drehhülse 52 mit dem freien Ende einer Kolbenstange 66 einer Zylindereinheit 68 verbunden, die elektrisch, pneumatisch oder hydraulisch aus einem Zylinder 70 aus- oder wieder in diesen eingefahren werden kann. Die Zylindereinheit 68 ist drehfest in der Drehhülse 52 verankert und bewegt sich mit dieser mit, wenn die Drehhülse 52 verdreht wird. Über die Zylindereinheit 68 ist somit auch der horizontale Tragholm 44 mit den beiden Greifmodulen 40, 42 drehfest mit der Drehhülse 52 gekoppelt und dreht sich bei einer Verdrehung der Drehhülse 52 mit.

Somit bilden der Lagermast 48, die Drehhülse 52, deren Antrieb 64 und die Zylindereinheit 68 und eine Rotationseinrichtung, mittels welcher der Tragholm 44 um die Hauptdrehachse 62 verdreht werden kann. Die Hauptdrehachse 62 ist dabei bei der vorliegenden Umsetzvorrichtung zwischen den beiden Greifmodulen 40 und 42 angeordnet.

Die Zylindereinheit 68 bildet außerdem eine Tragstruktur-Translationseinrichtung, mittels welcher der Tragholm 44 zusätzlich translatorisch in vertikale Richtung, d.h. mit einer Bewegungskomponente parallel zur Hauptdrehachse 62, zwischen einer obersten Hubstellung und einer untersten Senkstellung bewegt werden kann, wobei er seine horizontale Ausrichtung beibehält. Wenn die Kolbenstange 66 ausgefahren wird, wird der Tragholm 44 angehoben; wenn die Kolbenstange 66 dagegen eingefahren wird, wird der Tragholm 44 entsprechend abgesenkt.

Die Greifmodule 40, 42 werden nun am Beispiel des ersten Greifmoduls 40 erläutert. Die verwendeten Richtungsangaben beziehen sich dabei auf das Greifmodul 40, wie es am Tragholm 44 angebracht und ausgerichtet ist.

Das Greifmodul 40 umfasst eine Rahmenstruktur 72 mit einem zentral angeordneten Lagerblock 73, über den das Greifmodul 10 mit dem Tragholm 44 gekoppelt werden kann.

Die Rahmenstruktur 72 umfasst zwei Paare 74, 76 von Führungsstegen, wobei jedes Stegpaar 74, 76 eine erste Greifeinheit 78 bzw. eine zweite Greifeinheit 80 trägt.

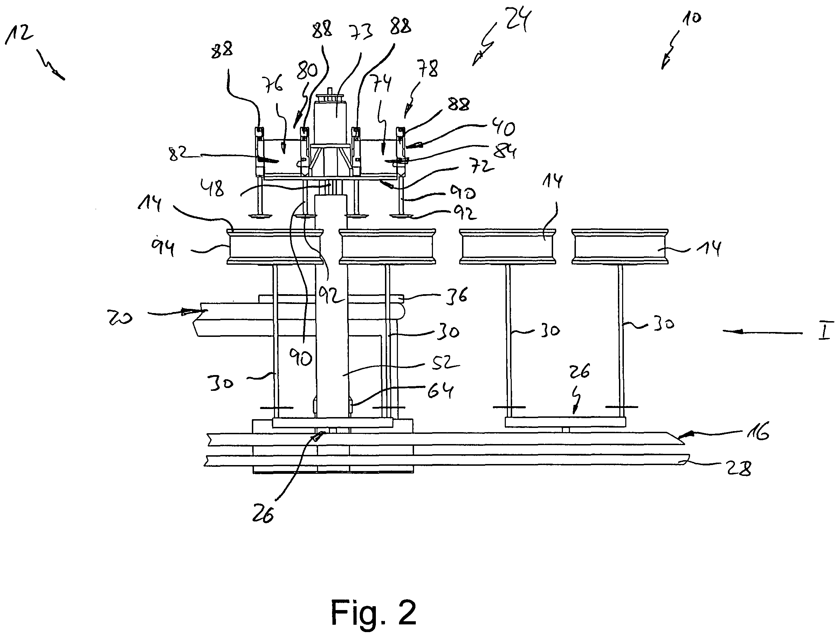

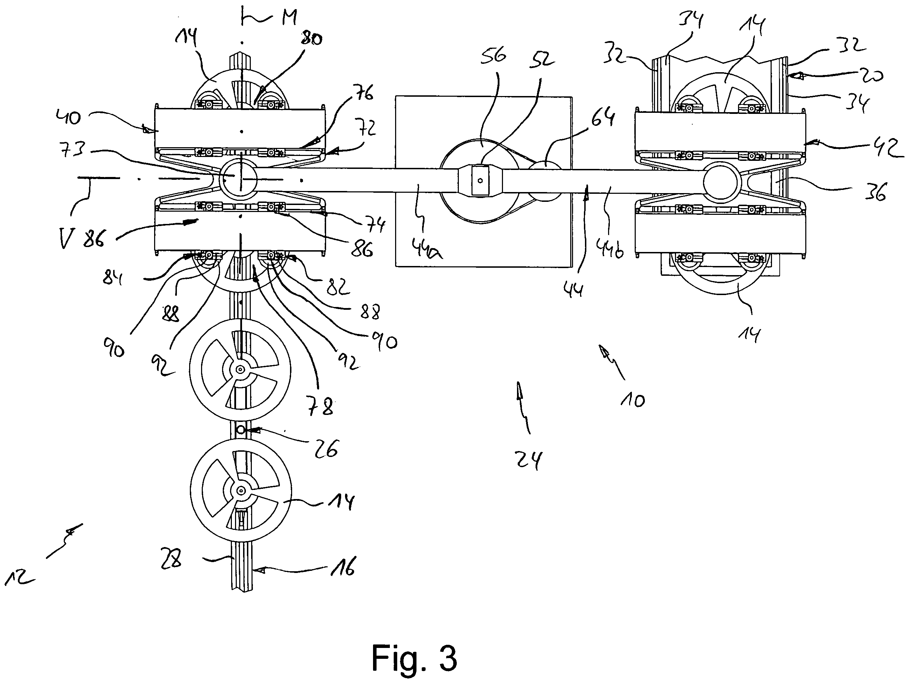

Das Greifmodul 40 ist zu einer nur in Figur 3 gezeigten vertikalen Ebene V spiegelsymmetrisch, die durch die Längsachse des Lagerblocks 73 verläuft. Nachfolgend wird lediglich auf die erste Greifeinheit 78 eingegangen, welche in Figur 1 zu erkennen ist und in Figur 2 rechts und in Figur 3 unten angeordnet ist. Das hierzu Gesagte gilt sinngemäß entsprechend für die zweite Greifeinheit 80, deren korrespondierende Komponenten der Übersichtlichkeit halber nicht mit Bezugszeichen versehen sind.

Die Greifeinheit 78 umfasst zwei Tragschlitten 82 und 84, welche ihrerseits jeweils auf beiden Stegen des Stegpaares 74 gelagert sind und somit parallel zu dem Stegpaar 74 verfahren werden können. Die Tragschlitten 82, 84 führen jeweils einen Elektromotor 86 mit sich, durch welchen sie motorisch entlang des Stegpaares 74 verfahren werden können.

Die beiden Schlitten 82 und 84 sind dabei über ein nicht eigens gezeigtes Zahngestänge derart miteinander gekoppelt, dass stets eine Bewegung beider Schlitten 82, 84 erfolgt und diese Bewegung stets symmetrisch zu einer vertikalen Ebene M erfolgt, die senkrecht zur oben angesprochenen vertikalen Symmetrieebene V ist. Diese Ebene M ist ebenfalls nur in Figur 3 gezeigt.

An ihren gegenüberliegenden Enden tragen die Schlitten 82 und 84 jeweils eine Lagerbacke 88. Jede Lagerbacke 88 lagert ihrerseits eine nach unten abragende Stange 90, die an ihrem unteren Ende koaxial einen Anpressteller 92 trägt, so dass dieser horizontal ausgerichtet ist. Die Anpressteller 92 können als Anpresselement gegen die als Gegenfläche dienende Radaußenfläche 94 eines Fahrzeugrades 14 anpressen.

Durch die jeweils erste und zweite Greifeinheit 78, 80 sind beide Greifmodule 40, 42 als Doppelmodul ausgebildet und können jeweils zwei Fahrzeugräder 14 zugleich aufnehmen.

Bei der vorliegenden Umsetzvorrichtung umfasst jede Greifeinheit 78 vier Lagerbacken 88 mit Stange 90 und Anpressteller 92. Grundsätzlich ist es ausreichend, wenn nur drei dieser Anordnungen pro Greifeinheit 78 vorhanden sind.

Die Anpressteller 92 können aus verschiedenen Materialien sein und abhängig davon, wo sie an der Radaußenfläche 62 des Fahrzeugrades 12 angreifen, verschiedene Ausbildungen haben. So können sie aus Kunststoff und verhältnismäßig dick sein, wenn an der Radschulter angegriffen wird. Dagegen werden sie bei einem Kontakt im Bereich des Radsitzes eher flach ausfallen. Wenn ein frisch beschichtetes Fahrzeugrad 14 gegriffen werden soll, wird der Anpressteller 92 einen scharfen Außenrand haben, so dass es nur eine kleine Kontaktfläche zwischen ihm und dem Fahrzeugrad 14 gibt.

Die oben beschriebene Umsetzstation 10 mit der Umsetzvorrichtung 24 funktioniert nun wie folgt:
Als Ausgangssituation sei angenommen, dass sich das erste Greifmodul 40 oberhalb des Spindelförderers 16 und das zweite Greifmodul 42 oberhalb des Kettenförderers 20 befindet, wobei der Tragholm 44 seine oberste Hubstellung einnimmt.

Das erste Greifmodul 40 ist leer, wogegen das zweite Greifmodul 42 mit jeder Greifeinheit 78, 80 jeweils ein Fahrzeugrad 14 trägt.

Der Spindelförderer 16 hat bereits zwei Fahrzeugräder 14 unter das erste Greifmodul 40 gefördert, während der Kettenförderer 20 einen leeren Werkstückträger 36 unter dem zweiten Greifmodul 42 positioniert hat.

Die Schlitten 82 und 84 der Greifeinheiten 78, 80 des ersten Greifmoduls 40 sind so weit auseinander gefahren, dass die Anpressteller 92 jeder Greifeinheit 78, 80 jeweils über ein Fahrzeugrad 14 gefahren werden können, indem der Tragholm 44 mittels der Zylindereinheit 68 abgesenkt wird. Dabei werden die Fahrzeugräder 14, die von dem zweiten Greifmodul 42 getragen sind, auf die Werkstückspindeln 38 des Werkstückträgers 36 auf dem Kettenförderer 20 aufgesetzt.

Nun werden die Paare aus den Schlitten 82, 84 beider Greifeinheiten 78, 80 des ersten Greifmoduls 40 wieder aufeinander zu bewegt, bis die Anpressteller 92 jeder Greifeinheit 78, 80 an den Radaußenflächen 94 der Fahrzeugräder 14 anliegen. Eine Zentrierung der Anpressteller 92 bezogen auf die Mittelebene M erfolgt dabei automatisch auf Grund der erwähnten Zahnstangen. Nun hat das erste Greifmodul 40 die beiden Fahrzeugräder 14 von dem Spindelförderer 16 aufgenommen.

Zeitgleich werden die Schlitten 82, 84 des zweiten Greifmoduls 42 auseinander gefahren, wodurch das zweite Greifmodul 42 die Fahrzeugräder 14 an den Werkstückträger 36 des Kettenförderers 36 freigibt.

Sodann wird der Tragholm 44 mittels der Zylindereinheit 68 in seine oberste Hubstellung gefahren. Das erste Greifmodul 40 hebt dabei die Fahrzeugräder 14 von dem Spindelförderer 16 ab, wogegen das zweite Greifmodul 42 leer von dem Werkstückträger 36 des Kettenförderers 20 abgehoben wird.

Jetzt wird der Antrieb 64 der Rotationseinrichtung betätigt und der Tragholm 44 um die Hauptdrehachse 62 um 180° verdreht, so dass das erste beladene Greifmodul 40 über dem Kettenförderer 20 und das zweite leere Greifmodul 42 über dem Spindelförderer 16 zu liegen kommt. Währenddessen sind sowohl der Spindelförderer 16 als auch der Kettenförderer 20 weitergelaufen, wodurch sich auf dem Spindelförderer 16 bereits zwei weitere Fahrzeugräder 14 unter dem zweiten Greifmodul 42 befinden und auf dem Kettenförderer 20 ein leerer Werkstückträger 36 unter dem ersten Greifmodul 40 angeordnet ist.

Die oben beschriebene Aufnahme von Fahrzeugrädern 14 von dem Spindelförderer 16 und Übergabe von Fahrzeugrädern 14 an den Kettenförderer 20 wird nun erneut mit in ihrer Position vertauschten Greifmodulen 40, 42 und hiernach immer abwechselnd durchgeführt.

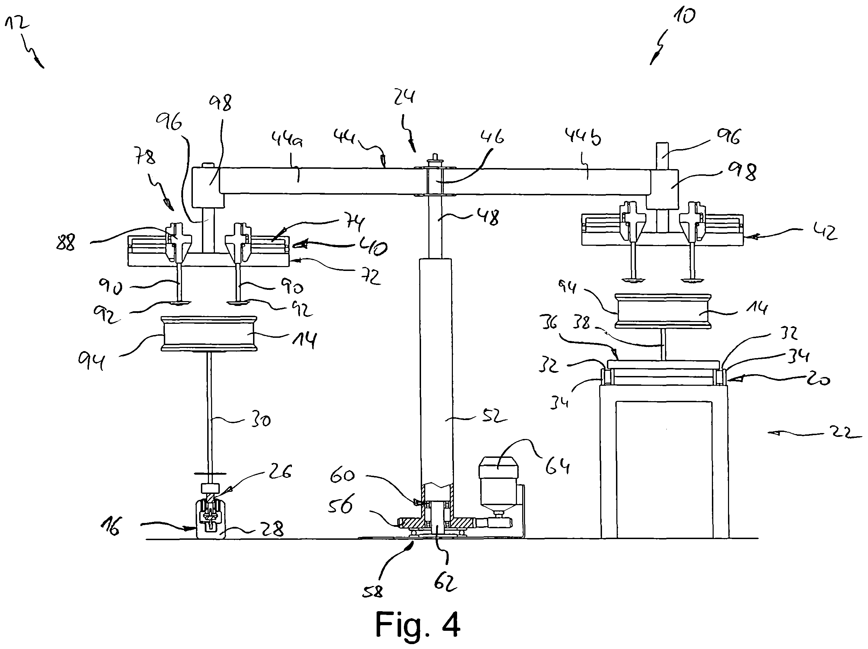

In Figur 4 ist eine Umsetzstation mit einer erfindungsgemäßen Umsetzvorrichtung 24 gezeigt. Bei dieser Umsetzvorrichtung kann jedes Greifmodul 40, 42 zusätzlich gegenüber dem Tragholm 44 in vertikaler Richtung hoch und runter gefahren werden. Hierzu ist jedes Greifmodul 40, 42 von einer vertikalen Tragstange 96 getragen, die jeweils mit einem Elektromotor 98 gekoppelt ist, so dass diese motorisch nach oben oder unten verschoben werden kann, wobei sie das jeweilige Greifmodul 40, 42 mit sich führt. So bildet jede Tragstange 96 mit dem zugehörigen Motor 98 jeweils eine Greifmodul-Translationseinrichtung, mittels welcher das entsprechende Greifmodul 40, 42 gegenüber dem Tragholm 44 mit einer Bewegungskomponente parallel zur Hauptdrehachse 62 bewegbar ist.

Durch diese Maßnahme können Fahrzeugräder 14 zwischen unterschiedlichen Höhenniveaus umgesetzt werden, was in Figur 4 dadurch veranschaulicht ist, dass die Fahrzeugräder 14 auf dem Spindelförderer 16 tiefer liegen als die Fahrzeugräder 14 auf dem Werkstückträger 36 des Kettenförderers 20.

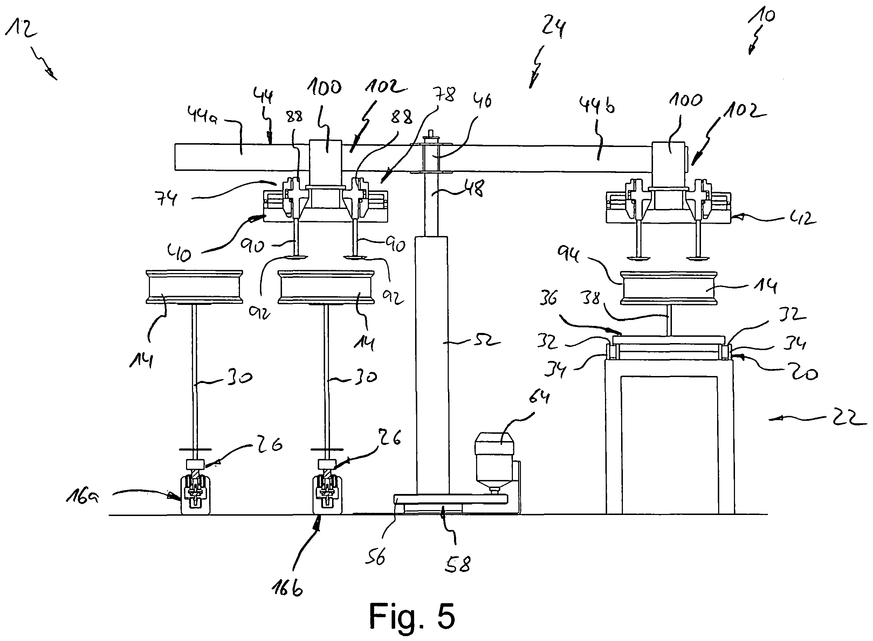

In Figur 5 ist eine Umsetzstation mit einer modifizierten Umsetzvorrichtung 24 gezeigt. Bei dieser ist jedes Greifmodul 40, 42 von einem Schlitten 100 mitgeführt. Dieser kann mit Hilfe eines nicht eigens gezeigten Elektromotors entlang des Tragholmes 44 verfahren werden. Somit ist eine Verfahreinrichtung 102 ausgebildet, durch welche die Greifmodule 40, 42 an dem Tragholm 44 mit einer Bewegungskomponenten senkrecht zur Hauptdrehachse 62 verfahrbar sind. Die Greifmodule 40, 42 können dabei unabhängig voneinander verfahren werden.

Die zusätzliche Bewegungsachse der Greifmodule 40, 42 kann beispielsweise erforderlich sein, wenn zwei Förderer vorhanden sind, welche Fahrzeugräder 14 aus unterschiedlichen Produktionslinien zur Umsetzstation 10 fördern. Dies ist in Figur 5 am Beispiel von zwei Spindelförderern 16a, 16b veranschaulicht, die parallel nebeneinander verlaufen. Durch die Verfahrbarkeit der Greifmodule 40, 42 entlang des Tragholms 44 können nun wahlweise Fahrzeugräder 14 von der ersten Spindelförderer 16a oder dem zweiten Spindelförderer 16b auf den Kettenförderer 20 umgesetzt werden.

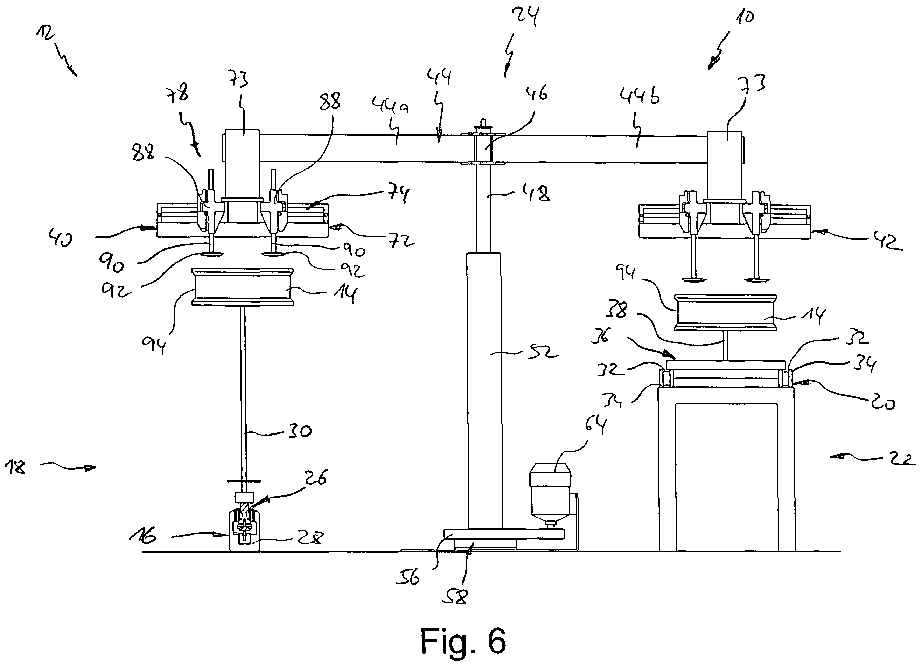

In Figur 6 ist eine Umsetzstation mit einer nochmals abgewandelten Umsetzvorrichtung 24 gezeigt. Dort ist zwar keine Greifmodul-Translationseinrichtung 96, 98 vorhanden, jedoch ist jede Stange 90 mit dem zugehörigen Anpressteller 92 von der zugehörigen Lagerbacke 88 nach oben und unten verschiebbar in einem nicht eigens mit einem Bezugszeichen versehenen Führungskanal gelagert.

Zudem führt jede Lagerbacke 88 einen ebenfalls nicht mit Bezugszeichen versehenen eigenen Elektromotor mit sich, der mit der jeweiligen Stange 90 gekoppelt ist, so dass diese motorisch nach oben oder unten verschoben werden kann. Somit sind mehrere Anpressteller-Translationseinrichtungen vorhanden, von denen jeweils eine einer Greifeinheit 78, 80 eines Greifmoduls 40, 42 zugeordnet ist und mittels welchen die Anpresselemente 92 dieser Greifeinheit 78, 80 gegenüber der Rahmenstruktur 72 des Greifmoduls 40, 42 mit einer Bewegungskomponente parallel zur Hauptdrehachse 62 bewegbar ist. Hierdurch kann die Axiallage jedes Fahrzeugrads 14 bezogen auf die Rahmenstruktur 72 eingestellt werden. Auch durch diese Maßnahme können Fahrzeugräder 14 zwischen unterschiedlichen Höhenniveaus umgesetzt werden, was in Figur 6 dadurch veranschaulicht ist, dass die Fahrzeugräder 14 auf dem Spindelförderer 16 höher liegen als die Fahrzeugräder 14 auf dem Werkstückträger 36 des Kettenförderers 20.

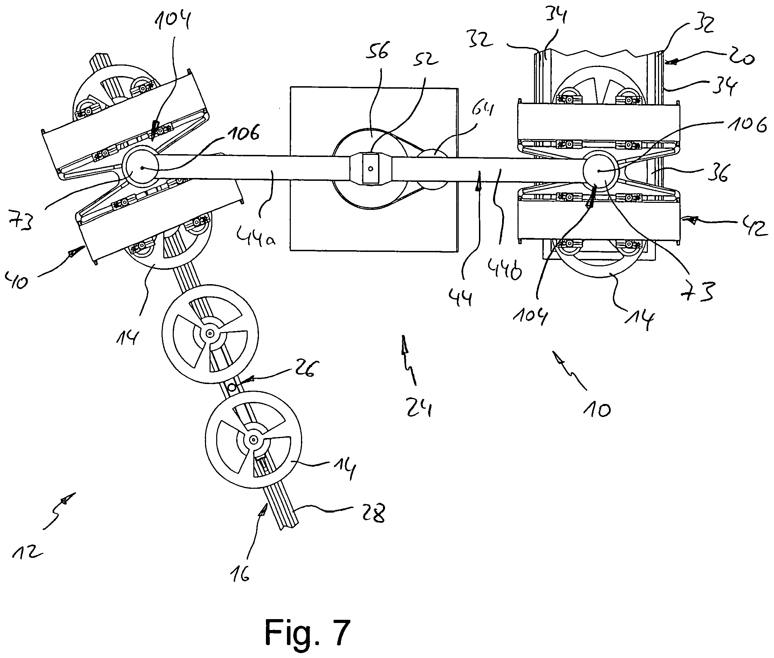

In Figur 7 ist eine umsetzstation mit einer abermals abgewandelten Umsetzvorrichtung 24 gezeigt, bei welcher jedes Greifmodul 40, 42 mittels einer Dreheinrichtung 104 um eine Nebendrehachse 106 verdrehbar ist, die parallel zur Hauptdrehachse 62 verläuft. Die Nebenachse 106 verläuft hier koaxial zu dem Lagerblock 73.

Hierdurch müssen der erste und der zweite Werkstückförderer 16, 20 nicht parallel zueinander verlaufen bzw. die Fahrzeugräder 14 als Paar nicht parallel zueinander fördern. Dies ist in Figur 7 dadurch veranschaulicht, dass der Spindelförderer 16 in einem Winkel zum Kettenförderer 20 verläuft.

Bei allen oben beschriebenen umsetzstationen können zwischen dem ersten und dem zweiten Werkstückförderer 16 und 20 Zwischenstationen vorgesehen sein, auf die die Fahrzeugräder 14 nach der Oberflächenbehandlung für eine nachträgliche Bearbeitung oder Kontrolle abgesetzt werden können. Diese Zwischenstationen sind von der Umsetzstation 10 nach einer Drehung des Tragholmes 44 von weniger als 180° erreichbar, wie sie hier zum Transport der Fahrzeugräder 14 vom ersten zum zweiten Werkstückförderer 16 bzw. 20 erfolgt. Als nachträgliche Bearbeitung kann z.B. eine Reinigung des Felgenflansches erfolgen.

## Patentansprüche

1. Vorrichtung zum Umsetzen von Fahrzeugrädern, bei welcher ein einzelnes Fahrzeugrad (14) mittels eines Greifmoduls (40, 42) greifbar ist, welches hierzu wenigstens eine von einer Rahmenstruktur (72) getragenen Greifeinheit (78, 80) mit mehreren Anpresselementen (92) umfasst, die an eine oder mehrere Gegenflächen (94) eines einzelnen Fahrzeugrades (14) anpressbar sind,
wobei
a) ein erstes Greifmodul (40) und ein zweites Greifmodul (42) an einer gemeinsamen starren Tragstruktur (44) angebracht sind, welche mittels einer Rotationseinrichtung (48, 52, 64, 68) um eine Hauptdrehachse (62) verdrehbar ist,
b) Translationsmittel (68; 88, 90; 96, 98) vorhanden sind, mittels welchen die Anpresselemente (92) mit einer Bewegungskomponente parallel zur Hauptdrehachse (62) bewegbar sind,
**dadurch gekennzeichnet, dass**
c) die Translationsmittel (68; 88, 90; 96, 98) eine Greifmodul-Translationseinrichtung (96, 98) umfassen, mittels welcher wenigstens ein Greifmodul (40, 42) gegenüber der Tragstruktur (44) mit einer Bewegungskomponente parallel zur Hauptdrehachse (62) bewegbar ist.

2. Vorrichtung nach Anspruch 1, **dadurch gekennzeichnet, dass** die Translationsmittel (68; 88, 90; 96, 98) eine Tragstruktur-Translationseinrichtung (68) umfassen, mittels welcher die Tragstruktur (44) mit einer Bewegungskomponente parallel zur Hauptdrehachse (62) bewegbar ist.

3. Vorrichtung nach einem der Ansprüche 1 bis 2, **dadurch gekennzeichnet, dass** die Translationsmittel (68; 88, 90; 96, 98) wenigstens eine Anpresselement-Translationseinrichtung (88, 90) umfassen, welche einer Greifeinheit (78, 80) eines Greifmoduls (40, 42) zugeordnet ist und mittels welcher die Anpresselemente (92) dieser Greifeinheit (78, 80) gegenüber der Rahmenstruktur (72) des Greifmoduls (40, 42) mit einer Bewegungskomponente parallel zur Hauptdrehachse (62) bewegbar ist.

4. Vorrichtung nach einem der Ansprüche 1 bis 3, **dadurch gekennzeichnet, dass** wenigstens ein Greifmodul (40, 42) an der Tragstruktur (44) mit einer Bewegungskomponente senkrecht zur Hauptdrehachse (62) verfahrbar ist.

5. Vorrichtung nach einem der Ansprüche 1 bis 4, **dadurch gekennzeichnet, dass** wenigstens eines der beiden Greifmodule (40, 42) als Doppelmodul ausgebildet ist und eine erste Greifeinheit (78) und eine zweite Greifeinheit (80) umfasst, wodurch zwei Fahrzeugräder (14) zugleich von dem Doppelmodul aufgenommen werden können.

6. Vorrichtung nach Anspruch 5, **dadurch gekennzeichnet, dass** das Doppelmodul mittels einer Dreheinrichtung (104) um eine Nebendrehachse (106) verdrehbar ist, die parallel zur Hauptdrehachse (62) verläuft.

7. Vorrichtung nach Anspruch 5 oder 6, **dadurch gekennzeichnet, dass** die Anpresselemente (92) der ersten Greifeinheit (78) unabhängig von den Anpresselementen (92) der zweiten Greifeinheit (80) translatorisch bewegbar sind.

8. Vorrichtung nach einem der Ansprüche 1 bis 7, **dadurch gekennzeichnet, dass** die Greifmodule (40, 42) derart eingerichtet sind, dass von den Greifmodulen (40, 42) gegriffene Fahrzeugräder (14) bezogen auf deren Rotationsachse achsparallel zueinander ausgerichtet sind.

9. Vorrichtung nach einem der Ansprüche 1 bis 8, **dadurch gekennzeichnet, dass** die Anpresselemente (92) einer Greifeinheit (78, 80) jeweils von einem Stangenelement (90) getragen und als Anpressteller ausgebildet sind, die mit ihrem Außenrand an eine Außenfläche (94) eines Fahrzeugrades (14) anpressbar sind, und eine Greifeinheit (78, 80) wenigstens drei Stangenelemente (90) mit Anpressteller umfasst.

## Claims

1. Device for transferring vehicle wheels, wherein an individual vehicle wheel (14) can be gripped by means of a gripping module (40, 42) which for this purpose includes at least one gripping unit (78, 80), supported by a frame structure (72), with several pressure elements (92) which are capable of being pressed against one or more mating surfaces (94) of an individual vehicle wheel (14),
wherein
a) a first gripping module (40) and a second gripping module (42) are attached to a common rigid supporting structure (44) which is capable of being rotated about a principal axis of rotation (62) by means of a rotary device (48, 52, 64, 68),
b) translation means (68; 88, 90; 96, 98) are present, by means of which the pressure elements (92) are capable of being moved with a motion component parallel to the principal axis of rotation (62),
**characterised in that**
c) the translation means (68; 88, 90; 96, 98) include a gripping-module translation device (96, 98), by means of which at least one gripping module (40, 42) is capable of being moved in relation to the supporting structure (44) with a motion component parallel to the principal axis of rotation (62).

2. Device according to Claim 1, **characterised in that** the translation means (68; 88, 90; 96, 98) include a supporting structure translation device (68), by means of which the supporting structure (44) is capable of being moved with a motion component parallel to the principal axis of rotation (62).

3. Device according to one of Claims 1 to 2, **characterised in that** the translation means (68; 88, 90; 96, 98) include at least one pressure element translation device (88, 90) which is dedicated to a gripping unit (78, 80) of a gripping module (40, 42) and by means of which the pressure elements (92) of this gripping unit (78, 80) are capable of being moved in relation to the frame structure (72) of the gripping module (40, 42) with a motion component parallel to the principal axis of rotation (62).

4. Device according to one of Claims 1 to 3, **characterised in that** at least one gripping module (40, 42) on the supporting structure (44) is displaceable with a motion component perpendicular to the principal axis of rotation (62).

5. Device according to one of Claims 1 to 4, **characterised in that** at least one of the two gripping modules (40, 42) takes the form of a dual module and includes a first gripping unit (78) and a second gripping unit (80), by virtue of which two vehicle wheels (14) can be picked up by the dual module at the same time.

6. Device according to Claim 5, **characterised in that** the dual module is capable of being rotated by means of a rotary device (104) about a secondary axis of rotation (106) which extends parallel to the principal axis of rotation (62).

7. Device according to Claim 5 or 6, **characterised in that** the pressure elements (92) of the first gripping unit (78) are capable of being moved in translation independently of the pressure elements (92) of the second gripping unit (80).

8. Device according to one of Claims 1 to 7, **characterised in that** the gripping modules (40, 42) have been set up in such a manner that vehicle wheels (14) gripped by the gripping modules (40, 42) have been aligned axially parallel to one another relative to the axis of rotation of said wheels.

9. Device according to one of Claims 1 to 8, **characterised in that** the pressure elements (92) of a gripping unit (78, 80) have each been supported by a rod element (90) and take the form of pressure discs which are capable of being pressed by their outer edge against an outer surface (94) of a vehicle wheel (14), and a gripping unit (78, 80) includes at least three rod elements (90) with a pressure disc.

## Revendications

1. Dispositif pour transférer des roues de véhicule, selon lequel une roue individuelle (14) de véhicule peut être saisie au moyen d'un module de préhension (40, 42), qui comprend à cet effet au moins une unité de préhension (78, 80) portée par une structure formant bâti (72) dotée de plusieurs éléments de pression (92), qui peuvent être pressés contre une ou plusieurs surfaces opposées (94) d'une roue individuelle (14) de véhicule,
sachant
a) qu'un premier module de préhension (40) et un deuxième module de préhension (42) sont montés sur une structure porteuse rigide commune (44), qui peut être tournée autour d'un axe de rotation principal (62) au moyen d'un dispositif de rotation (48, 52, 64, 68),
b) que des moyens de translation (68 ; 88, 90 ; 96, 98) sont présents, au moyen desquels les éléments de pression (92) peuvent être déplacés avec une composante de déplacement parallèle à l'axe de rotation principal (62), **caractérisé en ce que**
c) les moyens de translation (68 ; 88, 90 ; 96, 98) comprennent un dispositif (96, 98) de translation de module de préhension, au moyen duquel au moins un module de préhension (40, 42) peut être déplacé par rapport à la structure porteuse (44) avec une composante de déplacement parallèle à l'axe de rotation principal (62).

2. Dispositif selon la revendication 1, **caractérisé en ce que** les moyens de translation (68 ; 88, 90 ; 96, 98) comprennent un dispositif (68) de translation de structure porteuse, au moyen duquel la structure porteuse (44) peut être déplacée avec une composante de déplacement parallèle à l'axe de rotation principal (62).

3. Dispositif selon la revendication 1 ou 2, **caractérisé en ce que** les moyens de translation (68 ; 88, 90 ; 96, 98) comprennent au moins un dispositif (88, 90) de translation d'élément de pression, qui est associé à une unité de préhension (78, 80) d'un module de préhension (40, 42) et au moyen duquel les éléments de pression (92) de cette unité de préhension (78, 80) peuvent être déplacés par rapport à la structure formant bâti (72) du module de préhension (40, 42) avec une composante de déplacement parallèle à l'axe de rotation principal (62).

4. Dispositif selon l'une des revendications 1 à 3, **caractérisé en ce qu'**au moins un module de préhension (40, 42) peut être déplacé en translation sur la structure porteuse (44) avec une composante de déplacement perpendiculaire à l'axe de rotation principal (62).

5. Dispositif selon l'une des revendications 1 à 4, **caractérisé en ce qu'**au moins un des deux modules de préhension (40, 42) est réalisé sous forme de module double et comprend une première unité de préhension (78) et une deuxième unité de préhension (80), de sorte que deux roues de véhicule (14) peuvent être prises en charge en même temps par le module double.

6. Dispositif selon la revendication 5, **caractérisé en ce que** le module double peut, au moyen d'un dispositif de rotation (104), être tourné autour d'un axe de rotation secondaire (106) qui s'étend parallèlement à l'axe de rotation principal (62).

7. Dispositif selon la revendication 5 ou 6, **caractérisé en ce que** les éléments de pression (92) de la première unité de préhension (78) peuvent être déplacés en translation indépendamment des éléments de pression (92) de la deuxième unité de préhension (80).

8. Dispositif selon l'une des revendications 1 à 7, **caractérisé en ce que** les modules de préhension (40, 42) sont configurés de telle sorte que des roues de véhicule (14) saisies par les modules de préhension (40, 42) sont alignées en parallélisme axial l'une par rapport à l'autre relativement à l'axe de rotation de ces roues.

9. Dispositif selon l'une des revendications 1 à 8, **caractérisé en ce que** les éléments de pression (92) d'une unité de préhension (78, 80) sont respectivement portés par un élément en forme de tige (90) et sont réalisés sous la forme de disques de pression qui peuvent être pressés par leur bord extérieur contre une surface extérieure (94) d'une roue de véhicule (14), et une unité de préhension (78, 80) comprend au moins trois éléments en forme de tige (90) dotés de disques de pression.
